(19) Europäisches Patentamt
European Patent Office
Office européen des brevets

(11) **EP 2 670 523 B1**

(12) **EUROPÄISCHE PATENTSCHRIFT**

(45) Veröffentlichungstag und Bekanntmachung des Hinweises auf die Patenterteilung:
**03.05.2017 Patentblatt 2017/18**

(21) Anmeldenummer: **12701528.7**

(22) Anmeldetag: **01.02.2012**

(51) Int Cl.:
**B01F 17/14** *(2006.01)* **C02F 5/14** *(2006.01)*
**C08F 2/38** *(2006.01)*

(86) Internationale Anmeldenummer:
**PCT/EP2012/051614**

(87) Internationale Veröffentlichungsnummer:
**WO 2012/104325 (09.08.2012 Gazette 2012/32)**

(54) **NIEDERMOLEKULARE PHOSPHORHALTIGE POLYACRYLSÄUREN UND DEREN VERWENDUNG ALS BELAGSINHIBITOREN IN WASSERFÜHRENDEN SYSTEMEN**

LOW MOLECULAR MASS, PHOSPHORUS-CONTAINING POLYACRYLIC ACIDS AND USE THEREOF AS SCALE INHIBITORS IN WATER-CARRYING SYSTEMS

ACIDES POLYACRYLIQUES PHOSPHORÉS DE BAS POIDS MOLÉCULAIRE ET LEUR UTILISATION COMME INHIBITEURS DE DÉPÔTS DANS DES SYSTÈMES À CIRCULATION D'EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.02.2011 EP 11153341**

(43) Veröffentlichungstag der Anmeldung:
**11.12.2013 Patentblatt 2013/50**

(73) Patentinhaber: **BASF SE**
**67056 Ludwigshafen am Rhein (DE)**

(72) Erfinder:
• **DETERING, Jürgen**
**67117 Limburgerhof (DE)**
• **URTEL, Bolette**
**67240 Bobenheim-Roxheim (DE)**
• **NIED, Stephan**
**67435 Neustadt/Wstr. (DE)**
• **HEINTZ, Ewald**
**76889 Schweigen-Rechtenbach (DE)**

(56) Entgegenhaltungen:
EP-A1- 1 074 293    EP-A1- 2 182 011
WO-A1-2009/133186   WO-A1-2011/054789
US-A- 5 681 479

EP 2 670 523 B1

**Beschreibung**

Die Erfindung betrifft niedermolekulare phosphorhaltige Polyacrylsäuren, diese enthaltende wässrige Lösungen, Verfahren zu deren Herstellung sowie deren Verwendung als Belagsinhibitoren in wasserführenden Systemen.

Die Löslichkeit der meisten Stoffe in Wasser ist begrenzt. Insbesondere in der industriellen Wasserbehandlung ist die Verhinderung mineralischer Ablagerungen in wasserführenden Systemen wichtig. Anorganische Stoffe und Salze wie z.B. Calcium- und Magnesiumcarbonat, Magnesiumhydroxid, Calcium- und Bariumsulfat und Calciumphosphat besitzen in Wasser eine geringe Löslichkeit. Kommt es zu einer Aufkonzentrierung dieser gelösten Inhaltsstoffe in wässrigen Systemen, so wird deren Löslichkeitsprodukt überschritten mit der Folge, dass diese Stoffe ausfallen und Ablagerungen verursachen. Die Löslichkeit der Stoffe ist abhängig von der Temperatur und dem pH-Wert. Temperatur- und/oder pH-Wert-Erhöhung können ebenfalls Ursache von unerwünschten Ausfällungen und Belagsbildungen in Kühl- und Kesselspeisewassersystemen, auf Wärmeübertragungsflächen oder in Rohrleitungen sein.

Ausfällungen und Ablagerungen von Calciumsulfat in wasserführenden Systemen sind in besonderem Maße zu vermeiden, da sie nur sehr schwer wieder zu entfernen sind. Der kosten- und zeitintensive Einsatz von starken Komplexbildnern wie EDTA ist in der Regel unerlässlich, da durch Standardverfahren wie mechanische Reinigung oder die Verwendung von Säure die Ablagerungen nicht zufrieden stellend zu entfernen sind.

Nicht nur in Kühl- und Kesselspeisewassersystemen wird versucht, die Bildung von Calciumsulfat- und anderen Salzbelägen zu vermeiden. Auch in der Meerwasserentsalzung durch Destillation und durch Membranverfahren wie Umkehrosmose oder Elektrodialyse ist man bestrebt, diese festen Beläge nicht entstehen zu lassen.

Es ist bekannt, dass mittels radikalischer Polymerisation hergestellte niedermolekulare Polyacrylsäuren und ihre Salze aufgrund ihrer dispergierenden und das Kristallwachstum inhibierenden Eigenschaften Verwendung als Belagsverhinderer in der industriellen Wasserbehandlung und bei der Meerwasserentsalzung finden. Für eine gute Wirkung sollte das Molekulargewichtsmittel ($M_w$) dieser Polymere < 50 000 sein. Oft sind Polyacrylsäuren mit $M_w$ < 10 000 besonders effektiv. Um niedermolekulare Polyacrylsäuren herzustellen, werden Molekulargewichtsregler bzw. Kettenüberträger während der radikalischen Polymerisation von Acrylsäure zugesetzt. Diese Regler müssen auf den Polymerisationsinitiator sowie auf den Polymerisationsprozess abgestimmt sein. Initiatoren sind z.B. anorganische und organische Perverbindungen wie Peroxodisulfate (Persulfate), Peroxide, Hydroperoxide und Perester, Azoverbindungen wie 2,2'-Azobisisobutyronitril und Redoxsysteme mit anorganischen und organischen Komponenten. Als Regler werden häufig anorganische Schwefelverbindungen wie Hydrogensulfite, Disulfite und Dithionite, organische Sulfide, Sulfoxide, Sulfone und Mercaptoverbindungen wie Mercaptoethanol, Mercaptoessigsäure sowie anorganische Phosphorverbindungen wie Hypophosphorige Säure (Phosphinsäure) und ihre Salze (z.B. Natriumhypophosphit) eingesetzt.

EP-A 405 818 offenbart ein Verfahren zur Herstellung von Polymeren aus monoethylenisch ungesättigten Monocarbonsäuren und optional weiteren Monomeren mit Natriumpersulfat als Starter in Gegenwart von Hypophosphit als Regler, bei dem ein alkalisches Neutralisationsmittel während der Polymerisation in einer Menge, die ausreicht, um mindestens 20% der sauren Gruppen zu neutralisieren, zugegen ist. Die erhaltenen niedermolekularen Polymere enthalten mindestens 80% des aus dem Hypophosphit stammenden Phosphors. Mindestens 70% des Phosphors sollen sich als Dialkylphosphinat innerhalb der Polymerkette wieder finden. Die so hergestellten Polymere werden u.a. als Waschmitteladditive, Dispergiermittel für Clay-Slurries oder Belagsverhinderer für die Wasserbehandlung eingesetzt.

In den Ausführungsbeispielen wird Acrylsäure in Zulauf-Fahrweise in Gegenwart von Hypophosphit als Regler und Natriumpersulfat als Starter in Wasser polymerisiert, wobei währen der Polymerisation Natronlauge als weiterer kontinuierlicher Zulauf zugegeben wird. Es wird eine wässrige Polyacrylsäure mit einem gewichtsmittleren Molekulargewicht $M_w$ von 2700 g/mol erhalten, welche 72% des im Natriumhypophosphit enthaltenen Phosphors als Dialkylphosphinat, 18% als Monoalkylphosphinat und 10% in Form anorganischer Salze enthält. In einem Vergleichsbeispiel wird auf den Natronlaugezulauf verzichtet und erst nach Beendigung der Polymerisation mit Natronlauge neutralisiert. Dabei wird eine wässrige Polyacrylsäure mit einem gewichtsmittleren Molekulargewicht $M_w$ von 4320 g/mol erhalten, welche nur 45% des im Natriumhypophosphit enthaltenen Phosphors als Dialkylphosphinat, 25% als Monoalkylphosphinat und 30% in Form anorganischer Salze enthält.

EP-A 0 510 831 offenbart ein Verfahren zur Herstellung von Polymeren aus monoethylenisch ungesättigten Monocarbonsäuren, monoethylenisch ungesättigten Dicarbonsäuren und optional weiteren Monomeren, die keine Carboxylgruppe enthalten, in Gegenwart von Hypophosphoriger Säure als Kettenüberträger. Mindestens 40 % des im Polymer eingebauten Phosphors liegen als Monoalkylphosphinat und Monoalkylphosphonat am Ende der Polymerkette vor. Die Copolymere finden u.a. Verwendung als Dispergiermittel, Belagsinhibitoren und Waschmitteladditive.

EP-A 0 618 240 offenbart ein Verfahren zur Polymerisation von Monomeren in Wasser in Gegenwart eines wasserlöslichen Initiators und hypophosphoriger Säure oder eines ihrer Salze. Das Verfahren wird so durchgeführt, dass am Ende der Polymerisation der Polymergehalt mindestens 50 Gew.-% beträgt. Durch diese Fahrweise gelingt es, die Menge an aus dem Hypophosphit stammenden, im Polymer eingebauten Phosphor zu erhöhen. Dieser liegt in Form von Dialkylphoshinat, Monoalkylphosphinat sowie Monoalkylphosphonat im Polymer vor. Über die Verteilung des Phosphors wird keine Aussage gemacht. Die Copolymere finden u.a. Verwendung als Dispergiermittel, Belagsinhibitoren und Waschmitteladditive.

EP-A 1 074 293 offenbart Phosphonat-terminierte Polyacrylsäure mit einem Molekulargewicht $M_w$ von 2000 bis 5800 g/mol als Dispergiermittel zur Herstellung wässriger Slurries von Calciumcarbonat, Kaolin, Ton, Talk und Metalloxiden mit einem Feststoffgehalt von mindestens 60 Gew.-%.

JP 2010-77340 A offenbart ein Verfahren zur Herstellung wässriger Lösungen von Acrylsäure-Polymeren mit den Verfahrensschritten a) Zugabe von Wasser in den Reaktionsbehälter, b) Zugabe von Acrylsäure in Gegenwart von Hypophosphit und Peroxodisulfat und c) Neutralisation mit Natronlauge. Gemäß Beispiel 1 wird ein Acrylsäure-Polymer mit einem gewichtsmittleren Molekulargewicht $M_w$ von 6537 g/mol erhalten. Gemäß Beispiel 5 wird ein Acrylsäure-Polymer mit geringem Gehalt an am Polymerkettenende gebundenem Phosphor mit einem gewichtsmittleren Molekulargewicht $M_w$ von 6442 g/mol erhalten. Die Acrylsäure-Polymere gemäß den Beispielen 2, 3, 4 und 6 weisen zum Teil noch höhere gewichtsmittlere Molekulargewichte von bis zu 9944 g/mol auf. Die gewichtsmittleren Molekulargewichte der erhaltenen Acrylsäure-Polymere sind also verhältnismäßig hoch und liegen durchweg oberhalb von 6000 g/mol.

Die nicht vorveröffentlichte, prioritätsältere WO 2011/054789 A1 offenbart ein Verfahren zur Herstellung von wässrigen Lösungen von Acrylsäurehomo- oder copolymeren mittels eines kontinuierlichen Verfahrens, bei dem die Edukte sowie Wasser in einer Mischeinheit kontinuierlich vermischt werden, durch eine Reaktionszone hindurchgeleitet und kontinuierlich polymerisiert werden, wobei die Reaktionszone ein bestimmtes Temperaturprofil aufweist. Ein Verfahren, bei dem (i) Wasser und gegebenenfalls Comonomer vorgelegt und (ii) Acrylsäure und gegebenenfalls Comonomer kontinuierlich zugegeben werden (Zulauf-Verfahren), wird nicht offenbart.

WO 2009/133186 A1 offenbart ein Verfahren zur kontinuierlichen Herstellung eines Polymerisats, bei dem zwei flüssige Ströme enthaltend ein radikalisch polymerisierbares Monomer, einen Regler und einen Initiator in einem mikrostrukturierten Mischer vermischt und in einer Reaktionszone polymerisiert werden. In Verfahrensbeispiel 2 wird eine wässrige Lösung von Acrylsäure und AMPS in einem Mikromischer mit einer wässrigen Natriumpersulfat-Lösung vermischt und nachfolgend mit einer wässrigen Lösung von Natriumhypophosphit in einem zweiten Mikromischer vermischt. Die entstandene Reaktionslösung wird durch eine Reaktionskapillare gepumpt. Das erhaltene Polymer wird als Dispergiermittel für eine Calciumcarbonat-Aufschlämmung verwendet. Ein Zulauf-Verfahren wird ebenfalls nicht offenbart.

EP 2 182 011 A1 offenbart ein Verfahren zur Herstellung von wässrigen Lösungen von Acrylsäurehomopolymeren oder -copolymeren in Gegenwart eines schwefelhaltigen Reglers (sogenanntes RAFT-Reagenz). In den Beispielen wird das RAFT-Reagenz in Wasser vorgelegt, und Acrylsäure wird kontinuierlich zugegeben. Die Gegenwart von Hypophosphit wird nicht offenbart. Als Starter wird eine Azoverbindung verwendet.

Aufgabe der Erfindung ist es, niedermolekulare Polyacrylsäuren mit verbesserter belagsinhibierender Wirkung, die insbesondere Ausfällungen und Ablagerungen von Calciumsulfat in wasserführenden Systemen wirksam verhindern, sowie ein Verfahren zu ihrer Herstellung bereitzustellen.

Gelöst wird die Aufgabe durch wässrige Lösungen von Acrylsäure-Polymeren mit einem gewichtsmittleren Molekulargewicht von 1000 bis 4000 g/mol, erhältlich durch Polymerisation von Acrylsäure in Zulauf-Fahrweise mit Peroxodisulfat als Starter in Gegenwart von Hypophosphit als Regler in Wasser als Lösungsmittel, wobei

(i) Wasser und gegebenenfalls ein oder mehrere ethylenisch ungesättigte Comonomere vorgelegt und

(ii) Acrylsäure in saurer, nicht neutralisierter Form, gegebenenfalls ein oder mehrere ethylenisch ungesättigte Comonomere, eine wässrige Peroxodisulfat-Lösung und eine wässrige Hypophosphit-Lösung kontinuierlich zugegeben werden, und

(iii) nach Beendigung des Acrylsäure-Zulaufs zu der erhaltenen Lösung eine Base zugegeben wird, wobei der Comonomer-Gehalt 30 Gew.-%, bezogen auf den Gesamtmonomer-Gehalt, nicht übersteigt, und höchstens 16 % des Phosphors in Form von am Polymerkettenende gebundenen Phosphinat- und/oder Phosphonat-Gruppen vorliegt.

Gegenstand der Erfindung ist auch ein Verfahren zur Herstellung der wässrigen Lösungen der Acrylsäure-Polymere durch Polymerisation von Acrylsäure in Zulauf-Fahrweise mit Peroxodisulfat als Starter in Gegenwart von Hypophosphit als Regler in Wasser als Lösungsmittel, bei dem Wasser und gegebenenfalls ein oder mehrere ethylenisch ungesättigte Comonomere vorgelegt und Acrylsäure in saurer, nicht neutralisierter Form, gegebenenfalls eines oder mehrere ethylenisch ungesättigte Comonomere, eine wässrige Peroxodisulfat-Lösung und eine wässrige Hypophosphit-Lösung kontinuierlich zugegeben werden, und nach Beendigung des Acrylsäure-Zulaufs die erhaltene Lösung durch Zugabe von Base zumindest teilweise neutralisiert werden, wobei der Comonomer-Gehalt 30 Gew.-%, bezogen auf den Gesamtmonomer-Gehalt, nicht übersteigt.

Im Allgemeinen wird Wasser vorgelegt und auf die Reaktionstemperatur von mindestens 75 °C, bevorzugt 95 bis 105 °C erwärmt. Bei Temperaturen unterhalb von 75 °C zerfällt Peroxodisulfat im Allgemeinen nicht mehr mit ausreichender Geschwindigkeit. Zusätzlich kann eine wässrige Lösung von Phosphoriger Säure als Korrosionsinhibitor mit vorgelegt werden.

Anschließend werden die kontinuierlichen Zuläufe von Acrylsäure, gegebenenfalls dem weiteren ethylenisch ungesättigten Monomer, Starter und Regler gestartet. Acrylsäure wird in nicht neutralisierter, saurer Form zugegeben. Im Allgemeinen werden die Zuläufe gleichzeitig gestartet. Sowohl Peroxodisulfat als Starter als auch Hypophosphit als Regler werden in Form ihrer wässrigen Lösungen eingesetzt. Peroxodisulfat wird im Allgemeinen in Form des Natrium- oder Ammoniumsalzes eingesetzt. Hypophosphit kann in Form von Hypophosphoriger Säure (Phosphinsäure) oder in Form von Salzen der Hypophosphorigen Säure eingesetzt werden. Besonders bevorzugt wird Hypophosphit als Hypophosphorige Säure oder als Natriumsalz eingesetzt.

Der Peroxodisulfat-Gehalt der wässrigen Peroxodisulfat-Lösung beträgt vorzugsweise 5 bis 10 Gew.-%. Der Hypophosphit-Gehalt der wässrigen Hypophosphit-Lösung beträgt vorzugsweise 35 bis 70 Gew.-%.

Bevorzugt wird Peroxodisulfat in Mengen von 0,5 bis 10 Gew.-%, bevorzugt 0,8 bis 5 Gew.-%, bezogen auf die Gesamtmenge an Monomoren (Acrylsäure und gegebenenfalls Comonomere), eingesetzt.

Bevorzugt wird Hypophosphit in Mengen von 8 bis 25 Gew.-%, besonders bevorzugt 8 bis 15 Gew.-%, bezogen auf die Gesamtmenge an Monomeren, eingesetzt.

Die Zugabe der einzelnen Zuläufe erfolgt bevorzugt linear, d.h. die Zulaufmenge pro Zeiteinheit $\Delta m$ / $\Delta t$ (= Zulaufgeschwindigkeit) ist über die gesamte Dauer des Zulaufs konstant.

Die Dauer des Starter-Zulaufs kann bis zu 50% länger sein als die Dauer des Acrylsäure-Zulaufs. Vorzugsweise ist die Dauer des Starter-Zulaufs um ca. 3 bis 20% länger als die Dauer des Acrylsäure-Zulaufs. Die Dauer des Regler- Zulaufs kann bis zu 30% kürzer sein als die Dauer des Acrylsäure-Zulaufs. Bevorzugt ist die Dauer des Regler-Zulaufs um ca. 3 bis 20% kürzer als die Dauer des Acrylsäure-Zulaufs.

Die Dauer des Acrylsäure-Zulaufs beträgt beispielsweise 3 bis 6 h. Beispielsweise endet bei gleichzeitigem Start aller Zuläufe der Regler-Zulauf 10 bis 20 min vor dem Ende des Acrylsäure-Zulaufs, und endet der Starter-Zulauf 10 bis 20 min nach dem Ende des Acrylsäure-Zulaufs.

Im Allgemeinen wird nach Beendigung des Acrylsäure-Zulaufs die wässrige Lösung durch Zugabe einer Base zumindest teilweise neutralisiert. Als Base wird vorzugsweise Natronlauge eingesetzt. Die Neutralisation erfolgt im Allgemeinen über einen längeren Zeitraum von beispielsweise ½ bis 3 Stunden, um die Neutralisationswärme gut abführen zu können. Im Allgemeinen wird soviel Base zugegeben, dass der pH-Wert anschließend im Bereich von 3 bis 9, vorzugsweise 3,5 bis 8,5 liegt.

In einer Variante wird die Polymerisation unter Inertgasatmosphäre durchgeführt. Dabei werden Acrylsäure- Polymere erhalten, deren terminal gebundener Phosphor im Wesentlichen (im Allgemeinen zu mindestens 90%) in Form von Phosphinat-Gruppen vorliegt.

Es werden wässrige Lösungen von Acrylsäure-Polymeren mit einem Feststoffgehalt von im Allgemeinen mindestens 30 Gew.-%, bevorzugt mindestens 35 Gew.-%, besonders bevorzugt 40 bis 70 Gew.-%, insbesondere 40 bis 55 Gew.-% Polymer erhalten.

Die Acrylsäure-Polymere können auch durch geeignete Trocknungsverfahren wie Sprühtrocknung, Sprühgranulierung, Walzentrocknung oder Schaufeltrocknung in Pulver- oder Granulatform überführt werden.

Die so erhältliche wässrige Lösung von Acrylsäure-Polymeren weist im Allgemeinen einen Phosphor-Gesamtgehalt von organisch und gegebenenfalls anorganisch gebundenem Phosphor auf, wobei

(a) ein erster Teil des Phosphors in Form von in der Polymerkette gebundenen Phosphinat-Gruppen vorliegt,
(b) ein zweiter Teil des Phosphors in Form von am Polymerkettenende gebundenen Phosphinat und/oder Phosphonat-Gruppen vorliegt,
(c) gegebenenfalls ein dritter Teil des Phosphors in Form von gelösten anorganische Phosphorsalzen vorliegt.

Im Allgemeinen liegt mindestens 70%, bevorzugt mindestens 76% des Phosphor-Gesamtgehalts in Form von in der Polymerkette gebundenen Phosphinat-Gruppen vor.

In vielen Fällen liegen sogar mindestens 78% des Phosphor-Gesamtgehalts in Form von in der Polymerkette gebundenen Phosphinat-Gruppen vor.

Erfindungsgemäß liegen höchstens 20%, bevorzugt höchstens 16% des Phosphors in Form von am Polymerkettenende gebundenen Phosphinat- und/oder Phosphonat-Gruppen vor. Besonders bevorzugt liegen 8 bis 16% in Form von am Polymerkettenende gebundenen Phosphinat- und/oder Phosphonat-Gruppen vor.

Bis zu 20% des in der wässrigen Lösung der Acrylsäure-Polymere enthaltenen Phosphors können in Form von anorganischem Phosphor, insbesondere in Form von Hypophosphit und Phosphit vorliegen. Vorzugsweise liegen 2 bis 15%, besonders bevorzugt 4 bis 11% des Gesamt-Phosphors in Form von anorganisch gebundenem Phosphor vor.

Das Verhältnis von in der Polymerkette gebundenem Phosphor zu am Kettenende gebundenem Phosphor beträgt mindestens 4 : 1. Vorzugsweise beträgt dieses Verhältnis mindestens 4,5 : 1 bis 10 : 1, insbesondere 5 : 1 bis 8 : 1.

Das gewichtsmittlere Molekulargewicht des Acrylsäure-Polymers beträgt 1000 bis 4 000 g/mol, besonders bevorzugt 1000 bis 3000 g/mol und insbesondere 1200 bis 2500 g/mol.

Das Molekulargewicht des Acrylsäure-Polymers kann gezielt durch die verwendete Regler-Menge eingestellt werden.

Das Molekulargewicht wird mittels Gelpermeationschromatographie an neutralen wässrigen Lösungen der Acrylsäure-Polymere unter Verwendung von Hydroxyethylmethacrylat-Copolymer-Netzwerk (HEMA) als stationäre Phase und Polyacrylat-Standards ermittelt.

Im Allgemeinen beträgt der Polydispersitätsindex des Acrylsäure-Polymers $M_w / M_n \leq 2,5$, bevorzugt $\leq 2$.

Die K-Werte der Polymere liegen zwischen 10 und 25, vorzugsweise zwischen 10 und 20, besonders bevorzugt zwischen 12 und 18, gemessen bei pH 7 in 1 gew.-%iger wässriger Lösung bei 25 °C nach H. Fikentscher, Cellulose-Chemie Band 13, Seiten 58-64 und 71-74 (1932).

Das Acrylsäure-Polymer kann bis zu 30 Gew.-%, bevorzugt bis zu 20 Gew.-%, besonders bevorzugt bis zu 10 Gew.-%, bezogen auf alle ethylenisch ungesättigten Monomere, ethylenisch ungesättigte Comonomere einpolymerisiert enthalten. Beispiele für geeignete ethylenisch ungesättigte Comonomere sind Methacrylsäure, Maleinsäure, Maleinsäureanhydrid, Vinylsulfonsäure, Allylsulfonsäure und 2-Acrylamido-2-methylpropansulfonsäure sowie deren Salze. Auch Mischungen dieser Comonomere können enthalten sein.

Die Comonomere können vollständig in dem Reaktionsansatz vorgelegt werden, zum Teil vorgelegt werden und zum Teil als Zulauf zugegegeben oder vollständig als Zulauf zugegeben werden. Werden sie teilweise oder vollständig als Zulauf zugegeben, so werden sie im Allgemeinen synchron mit der Acrylsäure zugegeben.

Insbesondere bevorzugt sind Acrylsäure-Homopolymere ohne Comonomer-Anteil.

Gegenstand der Erfindung ist auch die Verwendung der wässrigen Lösungen der Acrylsäure-Polymere als Belagsinhibitoren in wasserführenden Systemen.

Durch die erfindungsgemäßen Acrylsäure-Polymere wird insbesondere die Bildung von Calciumsulfat-Belägen inhibiert.

Wasserführende Systeme, in denen die Acrylsäure-Polymere verwendet werden können, sind insbesondere Meerwasser-Entsalzungsanlagen, Kühlwassersysteme und Kesselspeisewassersysteme.

Im Allgemeinen werden die erfindungsgemäßen Polymere den wasserführenden Systemen in Mengen von 0,1 mg/l bis 100 mg/l zugegeben. Die optimale Dosierung richtet sich nach den Erfordernissen der jeweiligen Anwendung bzw. nach den Betriebsbedingungen des jeweiligen Verfahrens. So werden bei der thermischen Meerwasserentsalzung die Polymere bevorzugt in Konzentrationen von 0,5 mg/l bis 10 mg/l eingesetzt. In industriellen Kühlkreisläufen oder Kesselspeisewassersystemen finden Polymerkonzentrationen bis zu 100 mg/l Anwendung. Häufig werden Wasseranalysen durchgeführt, um den Anteil belagsbildender Salze und somit die optimale Dosierung zu ermitteln.

Den wasserführenden Systemen können auch Formulierungen zugegeben werden, die neben den erfindungsgemäßen Polymeren je nach Anforderung u.a. Phosphonate, Polyphosphate, Zinksalze, Molybdatsalze, organische Korrosionsinhibitoren wie Benzotriazol, Tolyltriazol, Benzimidazol oder Ethinylcarbinolalkoxylate, Biozide, Komplexbildner und/oder Tenside enthalten können. Beispiele für Phosponate sind 1-Hydroxyethan-1.1-diphosphonsäure (HEDP), 2-Phosphonobutan-1,2,4-tricarbonsäure (PBTC), Aminotrimethylenphosphonsäure (ATMP) Diethylentriaminpenta(methylenphosphonsäure) (DTPMP) und Ethylendiamintetra(methylenphophonsäure) (EDTMP), die jeweils in Form ihrer Natriumsalze verwendet werden.

Die Erfindung wird durch die nachstehenden Beispiele näher erläutert.

Beispiele

Die Bestimmung der Molekulargewichte erfolgte in allen Fällen mittels Gelpermeationschromatographie (GPC). Dabei wurden 2 Säulen (Suprema Linear M) und eine Vorsäule (Suprema Vorsäule), alle der Marke Suprema-Gel (HEMA) von der Firma Polymer Standard Services (Mainz, Deutschland), bei 35°C mit einer Flußrate von 0,8 ml/min betrieben. Als Eluent wurde eine mit TRIS bei pH 7 gepufferte wässrige Lösung verwendet, die mit 0,15 M NaCl und 0,01 M NaN3 versetzt war. Die Kalibrierung erfolgte mit einem Na-PAA Standard, deren integrale Molekulargewichtsverteilungskurve durch SEC-Laserlichtstreukopplung bestimmt worden war, nach dem Kalibrierverfahren von M.J.R. Cantow u.a. (J.Polym.Sci. ,A-1, 5(1967)1391-1394), allerdings ohne die dort vorgeschlagene Konzentrationskorrektur. Alle Proben wurden auf pH 7 eingestellt, ein Teil dieser Lösung wurde mit VE-Wasser auf einen Feststoffgehalt von 1,5 mg/mL verdünnt und 12 Stunden gerührt. Anschließend wurden die Proben filtriert. Jeweils 100 $\mu$L wurden mittels einer Sartorius Minisart RC 25 (0.2 $\mu$m) eingespritzt.

Beispiele

Beispiel A

In einem Reaktor wurden 425,0 g VE-Wasser vorgelegt und unter Stickstoff-Atmosphäre auf 102°C Innentemperatur erwärmt. Bei dieser Temperatur wurden gleichzeitig 481,0 g einer destillierten Acrylsäure, 206,0 g einer 7 gew.-

%igen wässrigen Natriumperoxodisulfat-Lösung und 246,0 g einer 59 gew.-%igen wässrigen Natriumhypophosphit-Lösung separat und parallel unter Rühren zudosiert. Acrylsäure wurde innerhalb von 4 Stunden, Natriumperoxodisulfat innerhalb von 4,25 Stunden und Natriumhypophosphit innerhalb von 3,75 Stunden zudosiert. Nach Ende des Acrylsäure-Zulaufs wurde die Leitung mit 30,0 g VE-Wasser gespült und 536,0 g einer 50 gew.-%igen wässrigen Natriumhydroxid-Lösung innerhalb von 1 Stunde bei 100°C Innentemperatur zugegeben. Danach wurde Polymer-Lösung auf Raumtemperatur abgekühlt. Es wurden der pH-Wert, die Molekulargewichte $M_n$ und $M_w$, der Feststoffgehalt und der Acrylsäure-Restgehalt bestimmt und die Lösung visuell beurteilt.

Beispiel B

In einem Reaktor wurden 425,0 g VE-Wasser vorgelegt und unter Stickstoff- Atmosphäre auf 102°C Innentemperatur erwärmt. Bei dieser Temperatur wurden gleichzeitig 481,0 g einer destillierten Acrylsäure, 138,0 g einer 7 gew.-%igen wässrigen Natriumperoxodisulfat-Lösung und 164,0 g einer 59 gew.-%igen wässrigen Natriumhypophosphit-Lösung separat und parallel unter Rühren zudosiert. Acrylsäure wurde innerhalb von 4 Stunden, Natriumperoxodisulfat innerhalb von 4,25 Stunden und Natriumhypophosphit innerhalb von 3,75 Stunden zudosiert. Nach Ende des Acrylsäure-Zulaufs wurde die Leitung mit 30,0 g VE-Wasser gespült und 525,0 g einer 50 gew.-%igen wässrigen Natriumhydroxid-Lösung innerhalb von 1 Stunde bei 102° C Innentemperatur zugeben. Danach wurde die Polymer-Lösung auf Raumtemperatur abgekühlt. Es wurden der pH-Wert, die Molekulargewichte $M_n$ und $M_w$ und der Feststoffgehalt bestimmt und die Lösung visuell beurteilt.

Beispiel C

In einem geschlossenen Reaktor wurden 425 g VE-Wasser vorgelegt. Anschließend wurde unter Stickstoff-Atmosphäre auf 98°C Innentemperatur erhitzt. Bei dieser Temperatur wurden gleichzeitig 481 g von einer destillierten Acrylsäure, 69 g einer 7 gew.-%igen wässrigen Natriumperoxodisulfat-Lösung und 82 g einer 59 gew.-%igen wässrigen Natriumhypophosphit-Lösung separat und parallel unter Rühren zudosieren. Acrylsäure wurde innerhalb von 4 Stunden, Natriumperoxodisulfat innerhalb von 4,25 Stunden und Natriumhypophosphit innerhalb von 3,75 Stunden zudosiert. Nach Ende des Acrylsäure-Zulaufs wurde mit 30 g VE-Wasser die Acrylsäure-Leitung gespült und anschließend 55 g einer 50 gew.-%ige wässrigen Natriumhydroxid-Lösung innerhalb von 1 Stunde bei 98°C Innentemperatur zugegeben. Nachfolgend wurden noch 225 g VE-Wasser zugegeben und die Polymer-Lösung auf Raumtemperatur abgekühlt. Es wurden der pH-Wert, die Molekulargewichte $M_n$ und $M_w$ und der Feststoffgehalt bestimmt und die Lösung visuell beurteilt.

Beispiel D

In einem Reaktor wurden 50 g Polymer aus Beispiel 9 vorgelegt. Bei Raumtemperatur wurden 17,5 g 50 gew.-%ige wässrige Natriumhydroxid-Lösung innerhalb von 1 Stunde bei 98° C Innentemperatur zugegeben. Es wurden der pH-Wert, die Molekulargewichte $M_n$ und $M_w$ und der Feststoffgehalt bestimmt und die Lösung visuell beurteilt.

Beispiel E

In einem Reaktor wurden 230,0 g VE-Wasser vorgelegt. Anschließend wurde unter Stickstoff-Atmosphäre auf 102°C Innentemperatur erhitzt. Bei dieser Temperatur wurden gleichzeitig 480,8 g einer destillierten Acrylsäure, 69,0 g einer 7 gew.-%igen wässrigen Natriumperoxodisulfat-Lösung und 57,0 g einer 59 gew.-%igen wässrigen Natriumhypophosphit-Lösung separat und parallel unter Rühren zudosiert. Die Acrylsäure wurde innerhalb von 5 Stunden, Natriumperoxodisulfat innerhalb von 5,25 Stunden und Natriumhypophosphit innerhalb von 4,75 Stunden zudosiert. Nach Ende des Acrylsäure-Zulaufs wurde die Leitung mit 30,0 g VE-Wasser gespült und es wurde 2 Stunden bei 95°C Innentemperatur gerührt. Dann wurden 175,0 g VE-Wasser zugegeben und dabei die Polymer-Lösung auf Raumtemperatur abgekühlt. Anschließend wurde mit 50 gew.-%iger Natronlauge die Polymerlösung auf pH 7 eingestellt. Es wurden der pH-Wert, die Molekulargewichte $M_n$ und $M_w$ und der Feststoffgehalt bestimmt und die Lösung visuell beurteilt.

Beispiel F

In einem Reaktor wurden 425,0 g VE-Wasser vorgelegt und unter Stickstoff-Atmosphäre auf 100°C Innentemperatur erwärmt. Bei dieser Temperatur wurden gleichzeitig 481,0 g einer destillierten Acrylsäure, 69,0 g einer 7 gew.-%igen wässrigen Natriumperoxodisulfat-Lösung und 41,0 g einer 59 gew.-%igen wässrigen Natriumhypophosphit-Lösung separat und parallel unter Rühren zudosiert. Acrylsäure wurde innerhalb von 4 Stunden, Natriumperoxodisulfat innerhalb von 4,25 Stunden und Natriumhypophosphit innerhalb von 3,75 Stunden zudosiert. Nach Ende des Acrylsäure-Zulaufs wurde die Leitung mit 30,0 g VE-Wasser gespült und nun 527,0 g einer 50 gew.-%igen wässrigen Natriumhydroxid-Lösung innerhalb von 1 Stunde bei 100°C Innentemperatur zugegeben. Danach wurde die Polymer-Lösung auf Raumtemperatur abgekühlt. Es wurden der pH-Wert, die Molekulargewichte $M_n$ und $M_w$, der Feststoffgehalt und der Acrylsäure-Restgehalt bestimmt und die Lösung visuell beurteilt.

Beispiel G

In einem Reaktor wurden 325,0 g VE-Wasser vorgelegt und unter Stickstoff-Atmosphäre auf 95°C Innentemperatur erwärmt. Bei dieser Temperatur wurden gleichzeitig 562,5 g einer destillierten Acrylsäure, 542,4 g einer 49 gew.-%igen wässrigen 2-Acrylamido-2-methylpropansulfonsäure Natrium Salz (Na-AMPS) Lösung, die mit 250 ppm MEHQ stabilisiert ist, 533,0 g einer 7 gew.-%igen wässrigen Natriumperoxodisulfat-Lösung und 127,1 g einer 59 gew.-%igen wässrigen Natriumhypophosphit-Lösung separat und parallel unter Rühren zudosiert. Acrylsäure und Na-AMPS wurden innerhalb von 3 Stunden, Natriumperoxodisulfat innerhalb von 4,5 Stunden und Natriumhypophosphit innerhalb von 2,75 Stunden zudosiert. Nach Ende des Acrylsäure-Zulaufs wurde 175,0 g einer 50 gew.-%igen wässrigen Natriumhydroxid-Lösung innerhalb von 2 Stunde bei 95°C Innentemperatur zugegeben. Danach wurde die Polymer-Lösung auf Raumtemperatur abgekühlt. Es wurden der pH-Wert, die Molekulargewichte $M_n$ und $M_w$, der Feststoffgehalt und der Acrylsäure-Restgehalt bestimmt und die Lösung visuell beurteilt.

Vergleichsbeispiele

Beispiel H

In einem Reaktor wurden 200,0 g VE-Wasser zusammen mit 2,7 g einer 50 gew.-%igen wässrigen Lösung von Phosphoriger Säure vorgelegt und unter Stickstoff-Atmosphäre auf 101 °C Innentemperatur erwärmt. Bei dieser Temperatur wurden gleichzeitig 428,0 g einer destillierten Acrylsäure, 123,0 g einer 7 gew.-%igen wässrigen Natriumperoxodisulfat-Lösung und 108,0 g 2-Mercaptoethanol separat und parallel unter Rühren zudosiert. Acrylsäure wurde innerhalb von 5 Stunden, Natriumperoxodisulfat innerhalb von 5,25 Stunden und 2-Mercaptoethanol innerhalb von 4,75 Stunden zudosiert. Nach Ende des Natriumperoxodisulfat-Zulaufs wurde noch 15 Minuten bei 101 °C Innentemperatur gerührt und anschließend auf 80°C Innentemperatur abgekühlt. Bei 80 °C Innentemperatur wurden 16,2 g einer 5,38 gew.-%igen wässrigen Lösung eines Azo-Starters (Wako V50) innerhalb von 30 Minuten zudosiert und es wurde 1 Stunde nachgerührt. Dann wurden 475,0 g 50 gew.-%ige wässrige Natriumhydroxid-Lösung in 1 Stunde bei 80 - 95°C Innentemperatur zugeben und 10 min gerührt. Dann wurden 14,0 g einer 50 gew.-%igen wässrigen Wasserstoffperoxid-Lösung in 30 Minuten zugegeben und es wurde 4 Stunden bei 80°C nachpolymerisiert. Danach wurde die Polymer-Lösung auf Raumtemperatur abgekühlt. Es wurden der pH-Wert, die Molekulargewichte $M_n$ und $M_w$ und der Feststoffgehalt bestimmt und die Lösung visuell beurteilt.

Beispiel I

In einem Reaktor wurden 230,0 g VE-Wasser zusammen mit 3,05 g einer 50 gew.-%igen wässrigen Phosphorigen Säure-Lösung vorgelegt und unter Stickstoff Atmosphäre auf 99°C Innentemperatur erhitzt. Bei dieser Temperatur wurden gleichzeitig 479,35 g einer destillierten Acrylsäure, 68,65 g einer 7 gew.-%igen wässrigen Natriumperoxodisulfat-Lösung und 59,9 g 2-Mercaptoethanol separat und parallel unter Rühren zudosiert. Die Acrylsäure wurde in 5 Stunden, Natriumperoxodisulfat in 5,25 Stunden und 2-Mercaptoethanol in 4,75 Stunden zudosiert. Nach Ende des Acrylsäure-Zulaufs wurde die Leitung mit 12,5 g VE-Wasser gespült, nach Ende des Natriumperoxodisulfat-Zulaufs 15 Minuten bei 105°C Innentemperatur gerührt, und anschließend auf 80°C Innentemperatur abgekühlt. Bei 80°C Innentemperatur wurden 5,0 g einer 6 gew.-%igen wässrigen Wako V50-Lösung innerhalb von 1 Stunde zudosiert. Nach Zulaufende wurde die Leitung mit 5,0 g VE-Wasser gespült und noch 1 Stunde bei 80°C nachgerührt. Dann wurden 521,5 g 50 gew.-%ige wässrige Natriumhydroxid-Lösung innerhalb von 1 Stunde bei maximal 105°C Innentemperatur zugegeben. Nachfolgend wurde 10 Minuten gerührt, dann 26,25 g einer 50 gew.-%igen wässrigen Wasserstoffperoxid-Lösung innerhalb von 1,3 Stunden zugegeben, und 15 Minuten bei 80°C nachpolymerisiert. Danach wurden 140,0 g VE-Wasser zugegeben und dabei die Polymer-Lösung auf Raumtemperatur abgekühlt. Es wurden der pH-Wert, die Molekulargewichte $M_n$ und $M_w$ und der Feststoffgehalt bestimmt und die Lösung visuell beurteilt.

Beispiel J

In einem Reaktor wurden 230 g VE-Wasser zusammen mit 3 kg einer 50 gew.-%igen wässrigen Lösung von Phosphoriger Säure vorgelegt und unter Stickstoff-Atmosphäre auf 99°C Innentemperatur erwärmt. Bei dieser Temperatur wurden gleichzeitig 516,9 g einer destillierten Acrylsäure, 67,4 g einer 7 gew.-%igen wässrigen Natriumperoxodisulfat-Lösung und 44 g 2-Mercaptoethanol separat und parallel unter Rühren zudosiert. Acrylsäure wurde innerhalb von 4 Stunden, Natriumperoxodisulfat innerhalb von 4 Stunden und 2-Mercaptoethanol innerhalb von 3,75 Stunden zudosiert. Nach Ende des Acrylsäure-Zulaufs wurde die Acrylsäure-Leitung mit 12,5 g VE-Wasser gespült, und noch 20 g einer 7 gew.-%igen wässrigen Natriumperoxodisulfat-Lösung innerhalb von 30 Minuten zugegeben. Anschließend wurde 30 Minuten bei 99°C Innentemperatur gerührt und auf 80°C Innentemperatur abgekühlt. Bei 80°C Innentemperatur wurden 10 g einer 6 gew.-%igen wässrigen Wako V50-Lösung innerhalb von 1 Stunde zudosiert, die Leitung mit 5 g VE-Wasser gespült, und noch 1 Stunde nachgerührt. Dann wurden 560 g einer 50 gew.-%igen wässrigen Natriumhydroxid-Lösung innerhalb von 1 Stunde bei 95°C Innentemperatur zugegeben und noch 10 Minuten gerührt. Dann wurden 20 g einer 50 gew.-%igen wässrigen Wasserstoffperoxid-Lösung innerhalb von 1 Stunden zugeben, und es wurde 15 Minuten bei 80°C nachpolymerisiert. Danach wurden 100 g VE-Wasser zugegeben und die Polymer-Lösung auf Raumtemperatur abgekühlt. Es wurden der pH-Wert, die Molekulargewichte $M_n$ und $M_w$, der Feststoffgehalt und der Acrylsäure-Restgehalt bestimmt und die Lösung visuell beurteilt.

Beispiel K

Es wurde wie in Beispiel 1 verfahren mit dem Unterschied, dass 50 g einer 56 gew.-%igen Lösung von 2-Mercaptoethanol und nur 62 g einer 7 gew.-%igen wässrigen Lösung von Natriumperoxodisulfat zugegeben wurden.

Beispiel L

In einem 2L-Reaktor wurden 230 g VE-Wasser zusammen mit 3,1 g einer 50 gew.-%igen wässrigen Lösung von Phosphoriger Säure vorgelegt. Anschließend wurde unter Stickstoff-Atmosphäre auf 99°C Innentemperatur erwärmt. Bei dieser Temperatur wurden gleichzeitig 520 g einer destillierten Acrylsäure, 74 g einer 7 gew.-%igen wässrigen Natriumperoxodisulfat-Lösung und 23,4 g 2-Mercaptoethanol separat und parallel unter Rühren zudosiert. Acrylsäure wurde innerhalb von 4 Stunden, Natriumperoxodisulfat innerhalb von 4 Stunden und 2-Mercaptoethanol innerhalb von 3,75 Stunden zudosiert. Nach Ende des Acrylsäure-Zulaufs wurden 500 g einer 50 gew.-%igen wässrigen Natriumhydroxid-Lösung innerhalb von 15 Minuten zugeben. Es wurden 15 Minuten bei 99°C Innentemperatur gerührt, und anschließend auf 80°C Innentemperatur abgekühlt. Bei 80°C Innentemperatur wurden 10,1 g einer 6 gew.-%igen wässrigen Wako V50-Lösung innerhalb von 1 Stunde zudosiert, und es wurde noch 1 Stunde nachgerührt. Dann wurden 525 g einer 50 gew.-%igen wässrigen Natriumhydroxid-Lösung innerhalb von 2,8 Stunde bei 95°C Innentemperatur zugegeben und 1 Stunde gerührt. Dann wurden 10,75 g einer 50 gew.-%igen wässrigen Wasserstoffperoxid-Lösung in 0,5 Stunden zugeben, und es wurde 15 Minuten bei 80°C nachpolymerisiert. Danach wurden 125 g VE-Wasser zugeben und dabei die Polymer-Lösung auf Raumtemperatur abgekühlt. Es wurden der pH-Wert, die Molekulargewichte $M_n$ und $M_w$, der Feststoffgehalt und der Acrylsäure-Restgehalt bestimmt und die Lösung visuell beurteilt.

Beispiel M

In einem geschlossenen Reaktor wurden 4 525 kg VE-Wasser vorgelegt. Anschließend wurde unter Stickstoff-Atmosphäre auf 95 °C Innentemperatur erwärmt. Bei dieser Temperatur wurden gleichzeitig 11 096 kg einer destillierten Acrylsäure, 4 756 kg einer 7 gew.-%igen wässrigen Natriumperoxodisulfat-Lösung und 4 993 kg einer 40 gew.-%igen wässrigen Natriumbisulfit-Lösung separat und parallel unter Rühren zudosiert. Acrylsäure wurde innerhalb von 5,5 Stunden, Natriumperoxodisulfat innerhalb von 5,75 Stunden und Natriumbisulfit innerhalb von 5,5 Stunden zudosiert. Nach Ende des Acrylsäure-Zulaufs wurde die Leitung mit 50 kg VE-Wasser gespült. Es wurde bei 95°C noch 15 Minuten gerührt und dann auf 80°C Innentemperatur abgekühlt. Bei dieser Temperatur wurden 189 kg einer 6 gew.-%igen wässrigen Wako V50-Lösung innerhalb von 1 Stunde zudosiert. Danach wurden 12 505 kg einer 50 gew.-%igen wässrigen Natriumhydroxid-Lösung zugeben, wobei die Innentemperatur 85° C nicht überstieg. Danach wurde die Polymer-Lösung auf Raumtemperatur abgekühlt. Es wurden der pH-Wert, die Molekulargewichte $M_n$ und $M_w$ und der Feststoffgehalt bestimmt und die Lösung visuell beurteilt.

Beispiel N

In einem Reaktor wurden 304,0 g VE-Wasser zusammen mit 1,84 g einer 50 gew.-%igen wässrigen Lösung von Phosphoriger Säure vorgelegt und unter Stickstoff-Atmosphäre auf 98°C Innentemperatur erwärmt. Bei dieser Temperatur wurden gleichzeitig 461,0 g einer destillierten Acrylsäure, 132,0 g einer 7 gew.-%igen wässrigen Natriumperoxodisulfat-Lösung und 196,0 g einer 40 gew.-%igen wässrigen Natriumbisulfit-Lösung separat und parallel unter Rühren zudosiert. Acrylsäure wurde innerhalb von 4 Stunden, Natriumperoxodisulfat innerhalb von 4,25 Stunden und Natriumbisulfit innerhalb von 3,75 Stunden zudosiert. Nach Ende des Acrylsäure-Zulaufs wurden 496,0 g einer 50 gew.-%igen wässrigen Natriumhydroxid-Lösung innerhalb von 1 Stunde bei 98°C Innentemperatur zugegeben, und es wurde noch 1 Stunde bei 98°C nachpolymerisiert. Danach wurde die Polymer-Lösung auf Raumtemperatur abgekühlt. Es wurden der pH-Wert, die Molekulargewichte $M_n$ und $M_w$, der Feststoffgehalt und der Acrylsäure-Restgehalt bestimmt und die Lösung visuell beurteilt.

Beispiel O

In einem Reaktor wurden 184,0 g VE-Wasser vorgelegt. Anschließend wurde unter Stickstoff-Atmosphäre auf 95°C Innentemperatur erhitzt. Bei dieser Temperatur wurden gleichzeitig 647,7 g einer destillierten Acrylsäure, 277,6 g einer 7 gew.-%igen wässrigen Natriumperoxodisulfat-Lösung und 105,3 g einer 40 gew.-%igen wässrigen Natriumbisulfit-Lösung separat und parallel unter Rühren zudosiert. Die Acrylsäure wurde innerhalb von 5 Stunden, Natriumperoxodisulfat innerhalb von 5,25 Stunden und Natriumbisulfit innerhalb von 5 Stunden zudosiert. Nach Ende des Acrylsäure-Zulaufs wurde die Leitung mit 10,0 g VE-Wasser 6 Minuten lang gespült und bei 95°C Innentemperatur noch 35 Minuten gerührt. Danach wurden 728,0 g einer 50 gew.-%igen wässrigen Natriumhydroxid-Lösung zugegeben, wobei die Innentemperatur 95°C nicht überstieg, und 30 Minuten bei 95°C nachpolymerisiert. Nachfolgend wurden 136,0 g VE-Wasser zugegeben, und dabei die Polymer-Lösung auf Raumtemperatur abgekühlt. Nachdem die Innentemperatur auf <75°C abgesunken war, wurden 5,8 g einer 49 gew.-%igen wässrigen Wasserstoffperoxid-Lösung zugegeben. Es wurden der pH-Wert, die Molekulargewichte $M_n$ und $M_w$ und der Feststoffgehalt bestimmt und die Lösung visuell beurteilt.

Die analytischen Daten der Polymere sind in Tabelle 1 zusammengefasst.

**Tabelle 1**

| Beispiel | Feststoffgehalt [%][a] | K Wert[b] | pH (tq) | Mw[c] | PDI[c] | %-P intern[d] | %-P extern[d] | %-P anorg[d] |
|---|---|---|---|---|---|---|---|---|
| A | 40,2 | 12,6 | 6,9 | 1270 | 1,2 | 81,2 | 13,5 | 5,3 |
| B | 42,2 | 14,6 | 7,0 | 2000 | 1,4 | 76,3 | 15,0 | 8,7 |
| C | 36,4 | 20,1 | 4,5 | 3620 | 1,7 | 81,4 | 11,4 | 7,2 |
| D | 39,0 | 20,1 | 7,0 | 3620 | 1,7 | 81,4 | 11,4 | 7,2 |
| E [e)] | 45,2 | 25,0 | 7,0 | 5560 | 2,1 | 84,7 | 12,1 | 2,6 |
| F [e)] | 42,3 | 29,1 | 7,0 | 7180 | 2,4 | 72,1 | 16,1 | 5,6 |
| G | 42,3 | 17,9 | 4,3 | 2870 | 2,0 | 89.5 | 8.2 | 2.2 |
| H | 49,7 | 12,6 | 7,6 | 1070 | 1,3 | - | - | - |
| I | 44,9 | 18,4 | 7,0 | 1860 | 1,8 | - | - | - |
| J | 46,7 | 22,0 | 7,2 | 3580 | 2,1 | - | - | - |
| K [e)] | 49,0 | 24,1 | 7,0 | 5020 | 1,7 | - | - | - |
| L [e)] | 45,2 | 29,5 | 7,2 | 7220 | 2,8 | - | - | - |
| M | 40,6 | 14,5 | 6,9 | 2470 | 1,5 | - | - | - |
| N [e)] | 43,5 | 20,3 | 6,9 | 4450 | 1,8 | - | - | - |
| O [e)] | 44,7 | 30,6 | 6,9 | 9560 | 3,1 | - | - | - |
| a) ISO 3251, (0.25 g, 150°C, 2h) <br> b) bestimmt durch Fikentscher Methode mit einer 1 %iger Lösung in VE-Wasser <br> c) bestimmt durch Gel Permeation Chromatographie <br> d) bestimmt mit $^{31}P\{^1H\}$ and $^{31}P$ NMR <br> e) nicht erfindungsgemäß | | | | | | | | |

**Verwendung als Belagsinhibitor**

**Calciumsulfat-Inhibierungstest**

Eine Lösung aus NaCl, $Na_2SO_4$, $CaCl_2$ und Polymer wurde 24 h bei 70 °C im Wasserbad geschüttelt. Nach Filtration der noch warmen Lösung über einen 0,45 $\mu$m Milexfilter wird der Ca-Gehalt des Filtrats komplexometrisch oder mittels eines $Ca^{2+}$-selektiven Elektrode ermittelt und durch Vergleich vorher / nachher die $CaSO_4$-Inhibierung in % ermittelt (siehe Formel I).

Bedingungen

| | |
|---|---|
| $Ca^{2+}$ | 2940 mg/l |
| $SO_4^{2-}$ | 7200 mg/l |
| $Na^+$ | 6400 mg/l |
| $Cl^-$ | 9700 mg/l |
| Polymer | 5 mg/l (100 %ig) |
| Temperatur | 70 °C |
| Zeit | 24 Stunden |
| PH | 8,0-8,5 |

**Formel I:**

$$CaSO_4\text{- Inhibierung (\%)} = \frac{mg\,(Ca^{2+})\text{ nach 24 h} - mg\,(Ca^{2+})\text{ Blindwert nach 24 h}}{mg\,(Ca^{2+})\text{ Nullwert} - mg\,(Ca^{2+})\text{ Blindwert nach 24 h}} \times 100$$

**Tabelle 2**

| | Starter / Regler | K-Wert (1%ig in Wasser) | Mw (GPC) | Inhibierung [%] |
|---|---|---|---|---|
| (Beispiel) | | | | |
| A | NPS / NHP | 12,6 | 1270 | 79,2 |
| B | NPS / NHP | 14,6 | 2000 | 84,4 |
| D | NPS / NHP | 20,1 | 3620 | 43,6 |
| E | NPS / NHP | 25,0 | 5560 | 14,5 |
| F | NPS / NHP | 29,1 | 7180 | 12,1 |
| G | NPS / NHP | 17,9 | 2870 | 66,9 |
| | | | | |
| H | NPS/MCE/Azo | 12,6 | 1070 | 22,6 |
| I | NPS/MCE/Azo | 18,4 | 1860 | 32,6 |
| J | NPS/MCE/Azo | 22,0 | 3580 | 19,3 |
| K | NPS/MCE/Azo | 24,1 | 5020 | 15,3 |
| L | NPS/MCE/Azo | 29,5 | 7220 | 12,6 |
| | | | | |
| M | NPS / NBS | 14,5 | 2470 | 25,5 |
| N | NPS / NBS | 20,3 | 4450 | 19,9 |
| O | NPS / NBS | 30,6 | 9560 | 9,1 |

| | | |
|---|---|---|
| NPS | = | Natriumperoxodisulfat |
| NHP | = | Natriumhypophosphit |
| MCE | = | Mercaptoethanol |
| NBS | = | Natriumbisulfit |
| Azo | = | 2,2'- Azobis(2-amidinopropan)dihydrochlorid zum Nachpolymerisieren |

Die Ergebnisse zeigen eindeutig die Überlegenheit der erfindungsgemäßen Polymere gemäß Beispielen A, B und D gegenüber den Vergleichspolymeren gemäß Beispielen H,I, J,M, N. Gemäß den Beispielen A, B und D sind die bevorzugten Molekulargewichte Mw < 4000, insbesondere < 2500.

**Patentansprüche**

1. Wässrige Lösung von Acrylsäure-Polymeren mit einem gewichtsmittleren Molekulargewicht von 1000 bis 4000 g/mol, erhältlich durch Polymerisation von Acrylsäure in Zulauf-Fahrweise mit Peroxodisulfat als Starter in Gegenwart von Hypophosphit in Wasser als Lösungsmittel, wobei

   (i) Wasser und gegebenenfalls ein oder mehrere ethylenisch ungesättigte Comonomere vorgelegt, und
   (ii) Acrylsäure in saurer, nicht neutralisierter Form, gegebenenfalls ein oder mehrere ethylenisch ungesättigte Comonomere, wässrige Peroxodisulfat-Lösung und wässrige Hypophosphit-Lösung kontinuierlich zugegeben werden, und
   (iii) nach Beendigung des Acrylsäure-Zulaufs zu der wässrigen Lösung eine Base zugegeben wird,

   wobei der Comonomer-Gehalt 30 Gew.-%, bezogen auf den Gesamtmonomer-Gehalt, nicht übersteigt, und höchstens 16 % des Phosphors in Form von am Polymerkettenende gebundenen Phophinat- und/oder Phosphonat-Gruppen vorliegt.

2. Wässrige Lösung nach Anspruch 1, **dadurch gekennzeichnet, dass** das gewichtsmittlere Molekulargewicht der Acrylsäure-Polymere 1200 bis 2500 g/mol beträgt

3. Wässrige Lösung nach Anspruch 1 oder 2, **dadurch gekennzeichnet, dass** der Polydispersitätsindex der Acrylsäure-Polymere $M_w / M_n \leq 2,5$ ist.

4. Wässrige Lösung nach einem der Ansprüche 1 bis 3 mit einem Phosphor-Gesamtgehalt von organisch und gegebenenfalls anorganisch gebundenem Phosphor, wobei

   (a) ein erster Teil des Phosphors in Form von in der Polymerkette gebundenen Phosphinat-Gruppen vorliegt,
   (b) ein zweiter Teil des Phosphors in Form von am Polymerkettenende gebundenen Phosphinat und/oder Phosphonat-Gruppen vorliegt,
   (c) gegebenenfalls ein dritter Teil des Phosphors in Form von gelösten anorganische Phosphorsalze vorliegt,

   **dadurch gekennzeichnet, dass** mindestens 70% des Phosphor-Gesamtgehalts in Form von in der Polymerkette der Acrylsäure-Polymere gebundenen Phosphinat-Gruppen vorliegt.

5. Wässrige Lösung nach einem der Ansprüche 1 bis 4, **dadurch gekennzeichnet, dass** die Acrylsäure-Polymere Acrylsäure-Homopolymere sind.

6. Wässrige Lösung nach einem der Ansprüche 1 bis 5, **dadurch gekennzeichnet, dass** die Acrylsäure-Polymere Acrylsäure-Copolymere sind, welche bis zu 30 Gew.-%, bezogen auf alle ethylenisch ungesättigten Monomere, ethylenisch ungesättigte Comonomere, ausgewählt aus der Gruppe bestehend aus Methacrylsäure, Maleinsäure(anhydrid), Vinylsulfonsäure, Allylsulfonsäure und 2-Acrylamido-2-methylpropansulfonsäure, einpolymerisiert enthalten.

7. Die aus den wässrigen Lösungen nach einem der Ansprüche 1 bis 6 erhältlichen Acrylsäure-Polymere.

8. Verfahren zur Herstellung von wässrigen Lösungen nach einem der Ansprüche 1 bis 6 durch Polymerisation von Acrylsäure in Zulauf-Fahrweise mit Peroxodisulfat als Starter in Gegenwart von Hypophosphit als Regler in Wasser als Lösungsmittel, bei dem Wasser und gegebenenfalls ein oder mehrere ethylenisch ungesättigte Comonomere vorgelegt und Acrylsäure in saurer, nicht neutralisierter Form, gegebenenfalls ein oder mehrere ethylenisch ungesättigte Comonomere, eine wässrige Peroxodisulfat-Lösung und eine wässrige Hypophosphit-Lösung kontinuierlich zugegeben werden, und nach Beendigung des Acrylsäure-Zulaufs zu der wässrigen Lösung eine Base zugegeben wird, wobei der Comonomer-Gehalt 30 Gew.-%, bezogen auf den Gesamtmonomer-Gehalt, nicht übersteigt.

9. Verfahren nach Anspruch 8, **dadurch gekennzeichnet, dass** die Polymerisation unter Inertgasatmosphäre durchgeführt wird.

**10.** Verwendung der wässrigen Lösungen nach einem der Ansprüche 1 bis 6 und der Acrylsäure-Polymere nach Anspruch 7 als Belagsinhibitoren in wasserführenden Systemen.

**11.** Verwendung nach Anspruch 10 zur Inhibierung von Calciumsulfat-Belägen.

**12.** Verwendung nach Anspruch 10 oder 11 in Meerwasser-Entsalzungsanlagen, Kühlwassersystemen und Kesselspeisewassersystemen.

**Claims**

**1.** An aqueous solution of acrylic acid polymers having a weight average molecular weight in the range from 1000 to 4000 g/mol, obtainable by polymerization of acrylic acid in feed mode with peroxodisulfate as initiator in the presence of hypophosphite in water as solvent, wherein

(i) water and optionally one or more ethylenically unsaturated comonomers are initially charged, and
(ii) acrylic acid in acidic, unneutralized form, optionally one or more ethylenically unsaturated comonomers, aqueous peroxodisulfate solution and aqueous hypophosphite solution are added continuously, and
(iii) a base is added on completion of the acrylic acid feed to the aqueous solution,

wherein the comonomer content does not exceed 30% by weight, based on total monomer content, and at most 16% of the phosphorus is present in the form of phosphinate and/or phosphonate groups bound at the polymer chain end.

**2.** The aqueous solution according to claim 1 or 2 wherein the weight average molecular weight of the acrylic acid polymers is in the range from 1200 to 2500 g/mol.

**3.** The aqueous solution according to claim 1 or 2 wherein the $M_w/M_n$ polydispersity index of the acrylic polymers is $\leq 2.5$.

**4.** The aqueous solution according to any one of claims 1 to 3 having a total phosphorus content of organically and possibly inorganically bound phosphorus, wherein

(a) a first portion of the phosphorus is present in the form of phosphinate groups bound within the polymer chain,
(b) a second portion of the phosphorus is present in the form of phosphinate and/or phosphonate groups bound at the polymer chain end,
(c) possibly a third portion of the phosphorus is present in the form of dissolved inorganic salts of phosphorus,

wherein at least 70% of the total phosphorus content is present in the form of phosphinate groups bound within the polymer chain of the acrylic acid polymers.

**5.** The aqueous solution according to any one of claims 1 to 4 wherein the acrylic acid polymers are acrylic acid homopolymers.

**6.** The aqueous solution according to any one of claims 1 to 5 wherein the acrylic acid polymers are acrylic acid copolymers comprising up to 30% by weight, based on all ethylenically unsaturated monomers, of ethylenically unsaturated comonomers selected from the group consisting of methacrylic acid, maleic acid, maleic anhydride, vinylsulfonic acid, allylsulfonic acid and 2-acrylamido-2-methylpropanesulfonic acid, as polymerized units.

**7.** The acrylic acid polymers obtainable from the aqueous solution according to any one of claims 1 to 6.

**8.** A process for producing aqueous solutions according to any one of claims 1 to 6 by polymerization of acrylic acid in feed mode with peroxodisulfate as initiator in the presence of hypophosphite as chain transfer agent in water as solvent, wherein water and optionally one or more ethylenically unsaturated comonomers are initially charged, and acrylic acid in acidic, unneutralized form, optionally one or more ethylenically unsaturated comonomers, an aqueous peroxodisulfate solution and an aqueous hypophosphite solution are added continuously, and a base is added on completion of the acrylic acid feed to the aqueous solution, wherein the comonomer content does not exceed 30% by weight, based on total monomer content.

9. The process according to claim 8 wherein the polymerization is carried out under an inert gas atmosphere.

10. The use of the aqueous solution according to any one of claims 1 to 6 and of the acrylic acid polymers according to claim 7 as scale inhibitors in water-carrying systems.

11. The use according to claim 10 for inhibiting calcium sulfate scale deposits.

12. The use according to claim 12 or 10 in seawater desalination plants, cooling water systems and boiler feed water systems.


**Revendications**

1. Solution aqueuse de polymères d'acide acrylique ayant une masse moléculaire moyenne en poids de 1 000 à 4 000 g/mole, pouvant être obtenue par polymérisation d'acide acrylique en mode opératoire par additions, avec du peroxodisulfate en tant qu'amorceur, en présence d'hypophosphite dans de l'eau en tant que solvant, dans laquelle

   (i) on dispose au préalable de l'eau et éventuellement un ou plusieurs comonomères à insaturation éthylénique, et
   (ii) on ajoute en continu de l'acide acrylique sous forme acide, non neutralisée, éventuellement un ou plusieurs comonomères à insaturation éthylénique, une solution aqueuse de peroxodisulfate et une solution aqueuse d'hypophosphite,
   (iii) une fois terminée l'addition d'acide acrylique on ajoute une base à la solution aqueuse,

   la teneur en comonomères n'excédant pas 30 % en poids, par rapport à la teneur totale en monomères, et au maximum 16 % du phosphore se trouvant sous forme de groupes phosphinate et/ou phosphonate liés l'extrémité de la chaîne du polymère.

2. Solution aqueuse selon la revendication 1, **caractérisée en ce que** la masse moléculaire moyenne en poids des polymères d'acide acrylique vaut de 1 200 à 2 500 g/mole.

3. Solution aqueuse selon la revendication 1 ou 2, **caractérisée en ce que** l'indice de polydispersité des polymères d'acide acrylique $M_w / M_n$ est $\leq 2,5$.

4. Solution aqueuse selon l'une quelconque des revendications 1 à 3, ayant une teneur totale en phosphore, de phosphore en liaison organique et éventuellement en liaison inorganique, dans laquelle

   (a) une première partie du phosphore se trouve sous forme de groupes phosphinate liés dans la chaîne du polymère,
   (b) une deuxième partie du phosphore se trouve sous forme de groupes phosphinate et/ou de groupes phosphonate, liés à l'extrémité de la chaîne du polymère,
   (c) éventuellement une troisième partie du phosphore se trouve sous forme de sels inorganiques de phosphore dissous,

   **caractérisée en ce qu'**au moins 70 % de la teneur totale en phosphore se trouvent sous forme de groupes phosphinate liés dans la chaîne polymère des polymères d'acide acrylique.

5. Solution aqueuse selon l'une quelconque des revendications 1 à 4, **caractérisée en ce que** les polymères d'acide acrylique sont des homopolymères d'acide acrylique.

6. Solution aqueuse selon l'une quelconque des revendications 1 à 5, **caractérisée en ce que** les polymères d'acide acrylique sont des copolymères d'acide acrylique qui contiennent, incorporés par polymérisation, jusqu'à 30 % en poids, par rapport à tous les monomères à insaturation éthylénique, de comonomères à insaturation éthylénique choisis dans le groupe constitué par l'acide méthacrylique, l'acide (anhydride) maléique, l'acide vinylsulfonique, l'acide allylsulfonique et l'acide 2-acrylamido-2-méthylpropanesulfonique.

7. Polymères d'acide acrylique pouvant être obtenus à partir des solutions aqueuses selon l'une quelconque des revendications 1 à 6.

8. Procédé pour la préparation de solutions aqueuses selon l'une quelconque des revendications 1 à 6, par polymérisation d'acide acrylique en mode opératoire par additions, avec du peroxodisulfate en tant qu'amorceur, en présence d'hypophosphite en tant que régulateur dans de l'eau en tant que solvant, dans lequel on dispose au préalable de l'eau et éventuellement un ou plusieurs comonomères à insaturation éthylénique, et on ajoute en continu de l'acide acrylique sous forme acide, non neutralisée, éventuellement un ou plusieurs comonomères à insaturation éthylénique, une solution aqueuse de peroxodisulfate et une solution aqueuse d'hypophosphite, et une fois terminée l'addition d'acide acrylique on ajoute une base à la solution aqueuse, la teneur en comonomères n'excédant pas 30 % en poids, par rapport à la teneur totale en monomères.

9. Procédé selon la revendication 8, **caractérisé en ce qu'**on effectue la polymérisation sous une atmosphère constituée d'un gaz inerte.

10. Utilisation des solutions aqueuses selon l'une quelconque des revendications 1 à 6 et des polymères d'acide acrylique selon la revendication 7, en tant qu'inhibiteurs de dépôts dans des systèmes conduisant l'eau.

11. Utilisation selon la revendication 10, pour l'inhibition de dépôts de sulfate de calcium.

12. Utilisation selon la revendication 10 ou 11, dans des installations de dessalement d'eau de mer, des systèmes d'eau de refroidissement et des systèmes d'eau d'alimentation de chaudières.

**IN DER BESCHREIBUNG AUFGEFÜHRTE DOKUMENTE**

**In der Beschreibung aufgeführte Patentdokumente**

- EP 405818 A
- EP 0510831 A
- EP 0618240 A
- EP 1074293 A
- JP 2010077340 A
- WO 2011054789 A1
- WO 2009133186 A1
- EP 2182011 A1

**In der Beschreibung aufgeführte Nicht-Patentliteratur**

- **H. FIKENTSCHER.** *Cellulose-Chemie Band,* 1932, vol. 13, 58-64, 71-74
- **M.J.R. CANTOW.** *J.Polym.Sci. ,A,* 1967, vol. 1 (5), 1391-1394